# EUROPEAN PATENT SPECIFICATION

(11) **EP 2 418 073 B1**
(45) Date of publication and mention of the grant of the patent: **10.10.2012**
(21) Application number: 10305863.2
(22) Date of filing: 05.08.2010
(51) Int. Cl.: G02B 27/01, B29C 45/14, B29L 11/00, B29D 11/00, G02C 7/08, B29C 33/12, B29C 39/00, B29C 39/10

(54) **A method of manufacturing an ophthalmic lens for providing an optical display**
Verfahren zur Herstellung eines Brillenglases zur Bereitstellung einer optischen Anzeige
Procédé de fabrication d'une lentille ophtalmique pour la fourniture d'un affichage optique

(43) Date of publication of application: 15.02.2012
(73) Proprietor: ESSILOR INTERNATIONAL (Compagnie Générale d'Optique), 94220 Charenton le Pont (FR)
(72) Inventor: Buchon, Cédric, 94220, CHARENTON-LE-PONT (FR); Gelly, Gérard, 94220, CHARENTON-LE-PONT (FR); Habassi, Chéfik, 94220, CHARENTON-LE-PONT (FR); Martin, Gérard, 94220, CHARENTON-LE-PONT (FR); Roptin, Vincent, 94220, CHARENTON-LE-PONT (FR); Videmann, Antoine, 94220, CHARENTON-LE-PONT (FR); Gacoin, Eric, 94220, CHARENTON LE PONT (FR)
(74) Representative: Lenne, Laurence

(56) References cited:
- EP-A1- 1 504 869
- WO-A1-2006/016086
- WO-A2-2006/091873
- US-A1- 2002 185 781
- US-A1- 2003 057 577

## Description

The present invention relates to a method of manufacturing an ophthalmic lens for making an optical display by means of an optical imager designed to allow information of the image or multimedia type to be viewed. The term "lens" is used herein to designate an optical system suitable in particular for being positioned in a frame for spectacles or eyeglasses.

This term "lens" is used to mean a finished lens ready for placing on a spectacles frame, or an unfinished lens or lens blank, i.e. that still needs to be subjected to at least one treatment, e.g. surfacing, in order to be usable.

The document WO 2006/016086 discloses a method of manufacturing a vision-correction lens 1 as represented in figure 1, that has a front face 1A and a rear face 1B, and into which light beams coming from a micro display 5 and emitted by an optical element of a light beam generator system 2 are introduced via an entry surface 3 and directed towards the eye of the wearer to enable information content to be viewed. The light beams are reflected a plurality of times between two reflection faces, between being introduced into the lens and exiting therefrom, these two reflection faces being faces of a transparent optical insert constituted by a light guide 4. According to this known method, the insert 4 is completely contained within the lens 1.

With this method of manufacturing an ophthalmic display, the vision of a user can be corrected, while being mass-produced in reliable manner, with this being achieved by decoupling the display and the vision-correction functions.

The entry surface 3 is formed by making a molded cavity in the lens, and it constitutes the bottom of the cavity. The cavity is molded by means of a stud secured to a mold portion, and the insert 4 is temporarily secured to this stud prior to molding. Once the lens is manufactured, the light beam generator system 2 is then placed on this entry surface 3.

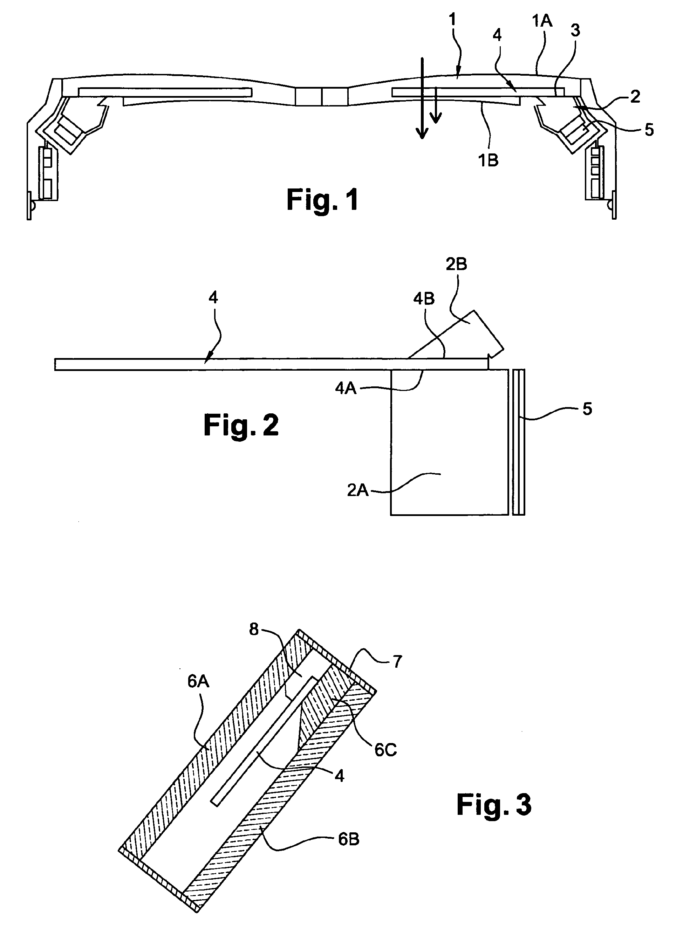

Other solutions propose such lens for making an optical display with complex light beam generator system formed by two beam generator pieces as represented in figure 2.

The first beam generator piece 2A is placed and stuck on the rear face of the light guide 4 and the second beam generator piece 2B is placed and stuck on the front face of the light guide 4. Such arrangement results in a beam generator system having a smaller volume and a repartition around the lens.

The object of the invention is to propose a method of manufacturing an ophthalmic lens relating to this arrangement with two beam generator pieces.

The invention is defined by claim 1.

The invention is described with below in greater detail with the help of figures that show merely a preferred embodiment of the invention.
Figure 1 is a section view of a display including a lens, according to first prior art.
Figure 2 is a section view of a display including a lens, according to second prior art.
Figure 3 is a section view showing the method in accordance with the invention for manufacturing the lens according to second prior art.
Figures 4A and 4B are perspective views showing the method in accordance with the invention for manufacturing the lens according to second prior art.
Figures 5A and 5B are perspective and lateral views of a lens obtained by means of the method in accordance with the invention.

As represented in figure 2, the invention concerns a method of manufacturing a vision-correction lens 1, that has a front face 1A and a rear face 1B, and into which light beams emitted by an optical element of a light beam generator system 2A, 2B are introduced and directed towards the eye of the wearer to enable information content to be viewed by means of a transparent light guide 4. The light beam generator system is constituted by two optical pieces, a first beam generator piece 2A placed on a first entry surface 4A of the rear face of the lens and a second optical piece 2B placed on a second entry surface 4B of the front face of the lens.

As represented in figures 3 to 5, the mold for manufacturing the lens essentially comprises a mold comprising two mold portions, a first mold portion 6A for molding the front face of the blank lens, and a second mold portion 6B for molding the rear face of the blank lens, the space between these two portions being closed by a cylindrical element 7.

The method consists in molding the lens 1 between this first mold portion 6A and this second mold portion 6B.

The first entry surface 4A is formed by making in the lens a molded cavity by means of a stud 6C secured to the second mold portion 6B, and the light guide 4 is temporarily secured to the stud 6C prior to molding.

The second entry surface 4B is formed by making in the lens a molded cavity by means of a mold part comprising a peripheric cylindrical element 7, the first mold portion 6A being placed above this lateral cylindrical element 7 and the space between the first mold portion 6A and the second mold portion 6B being closed by this lateral cylindrical element 7.

The first entry surface 4A through which the light beams emitted by the optical element of the first light beam generation piece 2A are introduced is formed by making a molded cavity in the lens, with the surface constituting the bottom of the cavity.

This cavity is molded by means of the stud 6C secured to the second mold portion 6B, and preferably integral therewith, and the light guide 4 is secured temporarily on the stud by adhesive prior to molding. The stud 6C is placed on a side edge of the second portion 6B.

The surface of the stud 6C that is to receive the light guide 4 is coated with adhesive, advantageously MR8UV, and the light guide is positioned on the stud 6C by an appropriate tool as a function of the marking provided on the mold. The light guide is pressed against a stud and held until the adhesive has polymerized. When using MR8, it is initiated with a particular photoinitiator that enables polymerization to take place quickly under UV radiation.

Most advantageously, the light guide 4 is secured temporarily to the stud 6C prior to molding by means of a layer of the monomer constituting the lens 1. As a result, the thin layer of monomer serving to bond the light guide then acts after unmolding as a thin layer covering the light guide at the entry surface 4A and presenting the same refractive index as the remainder of the lens 4.

The mold portions 6A, 6B may be made of metal, e.g. of X15 steel coated with a TiCN treatment to allow disassembly.

They may be of thermoplastic organic material, preferably of a material that does not adhere to the monomer resin used, e.g. polypropylene or TPX.

They may be of inorganic material with a coating constituted for example by a top coat or by an unmolding agent that can be added to the polymerizable resin constituting the lens 1.

By way of example, the used monomer for molding the lens 1 may be MR6.

The two mold portions 6A or 6B may be plane or curved depending on whether it is desired to manufacture a finished lens ready for positioning in a frame, or a lens blank as illustrated, i.e. that needs to be subjected to at least one further treatment, e.g. surfacing, in order to be usable.

According to the invention, the second entry surface 4B is formed by making in the lens a second cavity by adequate partial filling of the mold with monomer in order to form an air volume 8 and by adequate inclination of the mold, in order to form the second cavity with the air volume 8.

The mold can be filled in vertical position and then be inclined or it can be filled directly in inclined position.

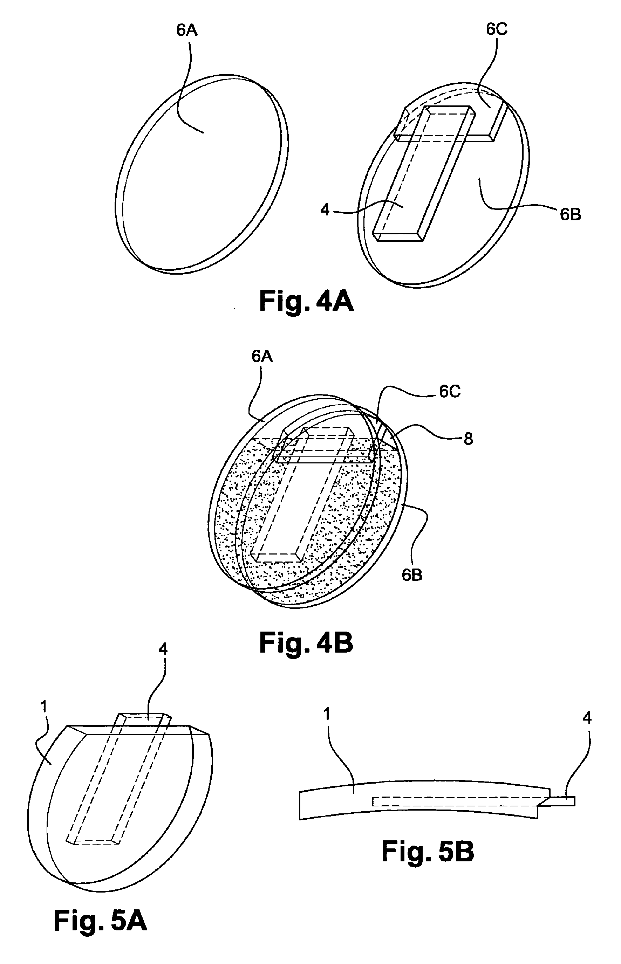

In the inclined position, the stud 6C and the air volume 8 are placed together with a common plane of symmetry, in order to form the corresponding cavity in the blank lens represented in figure 5A, the monomer is polymerized by heating in the mold and a blank lens is obtained which after surfacing of the faces of this blank lens gives a lens 1 as represented in figure 5B where it can be equipped with the first and second beam generator pieces 2A, 2B.

The quantity of monomer introduced in the mold and the angle of inclination are defined preferably by tests, and depend on the wished dimensions of the mold, of the light guide 4 and of the second entry surface 4B. Preferably, this inclination presents an angle equal to 70 to 80 degrees relating to a horizontal plane and the mold is filled with a rate of 75 to 85% taking into consideration the volume retraction of the monomer which can be of around 8%.

According to the preferred embodiment of the invention, as described here above, air is used in order to form the complementary volume 8 forming the second cavity.

More generally, the volume is filled with a component immiscible and chemically inert during molding with the molded product constituting the lens, which is preferably a monomer. Preferably, this component is a gas but it can be a liquid, which is removed after the molding and the casting of the monomer constituting the lens.

In case of use of liquid, the liquid can be less heavy than the molded product constituting the lens and the method of manufacturing is unchanged, as described here above, the complementary volume 8 being in the upside of the inclined mold.

The liquid can be heavier than the molded product constituting the lens too and the complementary volume 8 is in the downside of the inclined mold, the mold being turned by 180° relating to the arrangement described here above.

## Claims

1. A method of manufacturing a vision-correction lens (1), that has a front face (1A) and a rear face (1B), and into which light beams emitted by an optical element of a light beam generator system are introduced and directed towards the eye of the wearer to enable information content to be viewed by means of a transparent light guide (4), said light beam generator system comprising a first beam generator piece (2A) placed on a first entry surface (4A) of the rear face of the lens, method consisting in molding the lens (1) in a mold formed by a first mold portion (6A) and a second mold portion (6B), the space between these two portions being closed by a cylindrical element, and the first entry surface (4A) being formed by making in the lens a first molded cavity by means of a stud (6C) secured to the second mold portion (6B), and the light guide (4) being temporarily secured to said stud (6C) prior to molding, **characterized in that**, said light beam generator system comprising a second optical piece (2B) placed on a second entry surface (4B) of the front face of the lens,
- the second entry surface (4B) is formed by making in the lens a second cavity by adequate partial filling of the mold in order to form an complementary volume (8) forming said second cavity and filled with a component immiscible and chemically inert during molding with the molded product constituting the lens,
- the second entry surface (4B) is formed by making in the lens said second molded cavity by adequate inclination of the mold, said mold being inclined during polymerisation of the monomer constituting the lens, in order to form said second cavity with said complementary volume (8).

2. A method according claim 1, **characterized in that** said stud (6C) and said complementary volume (8) are placed together with a common plan of symmetry.

3. A method according to one of preceding claims, **characterized in that** said component is a gas.

4. A method according to the preceding claim, **characterized in that** said component is air.

## Patentansprüche

1. Verfahren zum Herstellen eines Sichtkorrekturglases (1), das eine Vorderfläche (1A) und eine Rückfläche (1B) aufweist und in das Lichtstrahlen, die von einem optischen Element eines Lichtstrahlerzeugersystems ausgesendet werden, eingebracht und in Richtung des Auges des Trägers gelenkt werden, um zu ermöglichen, dass Informationsgehalt mithilfe eines transparenten Lichtleiters (4) angezeigt werden kann, wobei das Lichtstrahlerzeugersystem ein erstes Lichtstrahlerzeugerstück (2A) umfasst, das auf einer ersten Eintrittsfläche (4A) der Rückfläche des Glases platziert ist, wobei das Verfahren aus dem Formen des Glases (1) in einer Form besteht, die durch einen ersten Formabschnitt (6A) und einen zweiten Formabschnitt (6B) gebildet ist, wobei der Raum zwischen diesen beiden Abschnitten von einem zylindrischen Element geschlossen wird, und wobei die erste Eintrittsfläche (4A) durch Bilden eines ersten geformten Hohlraums in dem Glas mithilfe eines Bolzens (6C), der an dem zweiten Formabschnitt (6B) befestigt ist, hergestellt wird, und wobei der Lichtleiter (4) vor dem Formen vorübergehend an dem Bolzen (6C) befestigt ist, **dadurch gekennzeichnet, dass** das Lichtstrahlerzeugersystem ein zweites optisches Stück (2B) umfasst, das auf einer zweiten Eintrittsfläche (4B) der Vorderfläche des Glases platziert ist,
- die zweite Eintrittsfläche (4B) durch Bilden eines zweiten Hohlraums in dem Glas durch entsprechendes teilweises Füllen der Form hergestellt wird, um ein Komplementärvolumen (8) zu bilden, das den zweiten Hohlraum bildet und mit einer Komponente gefüllt ist, die während des Formens in Bezug auf das geformte, das Glas darstellende Produkt unvermischbar und chemisch inert ist,
- die zweite Eintrittsfläche (4B) durch Bilden des zweiten geformten Hohlraums in dem Glas durch entsprechendes Neigen der Form hergestellt wird, wobei die Form während der Polymerisation des das Glas darstellenden Monomers geneigt wird, um den zweiten Hohlraum mit dem Komplementärvolumen (8) zu bilden.

2. Verfahren nach Anspruch 1, **dadurch gekennzeichnet, dass** der Bolzen (6C) und das Komplementärvolumen (8) gemeinsam mit einer gemeinsamen Symmetrieebene platziert werden.

3. Verfahren nach einem der vorstehenden Ansprüche, **dadurch gekennzeichnet, dass** die Komponente ein Gas ist.

4. Verfahren nach dem vorstehenden Anspruch, **dadurch gekennzeichnet, dass** die Komponente Luft ist.

## Revendications

1. Procédé pour fabriquer une lentille de correction (1), qui a une face avant (1A) et une face arrière (1B), dans laquelle des faisceaux lumineux émis par un élément optique d'un système de générateur de faisceau lumineux sont introduits et dirigés vers l'oeil de l'utilisateur pour permettre d'observer le contenu d'information au moyen d'un guide de lumière transparent (4), ledit système de générateur de faisceau lumineux comprenant une première pièce de générateur de faisceau (2A) placée sur une première surface d'entrée (4A) de la face arrière de la lentille, le procédé comprenant l'étape consistant à mouler la lentille (1) dans un moule formé par une première partie de moule (6A) et une deuxième partie de moule (6B), l'espace entre ces deux parties étant fermé par un élément cylindrique, et la première surface d'entrée (4A) étant formée en réalisant dans la lentille, une première cavité moulée au moyen d'une tige (6C) fixée sur la deuxième partie de moule (6B), et le guide de lumière (4) étant temporairement fixé sur ladite tige (6C) avant le moulage, **caractérisé en ce que** ledit système de générateur de faisceau lumineux comprend une deuxième pièce optique (2B) placée sur une deuxième surface d'entrée (4B) de la face avant de la lentille,
la deuxième surface d'entrée (4B) est formée en réalisant dans la lentille, une deuxième cavité en remplissant partiellement de manière adéquate le moule afin de former un volume complémentaire (8) formant ladite deuxième cavité et remplie avec un composant non miscible et chimiquement inerte pendant le moulage dont le produit moulé constitue la lentille,
la deuxième surface d'entrée (4B) est formée en réalisant dans la lentille, ladite deuxième cavité moulée, par l'inclinaison adéquate du moule, ledit moule étant incliné pendant la polymérisation du monomère constituant la lentille, afin de former ladite deuxième cavité avec ledit volume complémentaire (8).

2. Procédé selon la revendication 1, **caractérisé en ce que** ladite tige (6C) et ledit volume complémentaire (8) sont placés ensemble avec un plan de symétrie commun.

3. Procédé selon l'une des revendications précédentes, **caractérisé en ce que** ledit composant est un gaz.

4. Procédé selon la revendication précédente, **caractérisé en ce que** ledit composant est l'air.
